# EUROPEAN PATENT APPLICATION

(11) **EP 4 579 477 A1**
(43) Date of publication of application: **02.07.2025**
(21) Application number: 23856466.0
(22) Date of filing: 08.08.2023
(51) Int. Cl.: G06F 16/22, G06F 16/2458, G06F 16/27, G06F 16/901

(54) **DISTRIBUTED GRAPH DATA PROCESSING SYSTEM, METHOD, APPARATUS AND DEVICE, AND STORAGE MEDIUM**

(30) Priority: 23.08.2022 CN 202211010841
(71) Applicant: DOUYIN VISION CO., LTD., Beijing 100041 (CN); Lemon Inc., Grand Cayman, KY1-1205 (KY)
(72) Inventor: CHEN, Hongzhi, Beijing 100028 (CN); LIN, Peng, Los Angeles California 90066 (US); MA, Lin, Los Angeles California 90066 (US); WU, Kai, Los Angeles California 90066 (US); SHI, Haiyang, Los Angeles California 90066 (US); LIU, Xiao, Los Angeles California 90066 (US); XU, Wei, Los Angeles California 90066 (US); GONG, Dawei, Los Angeles California 90066 (US); ZHANG, Shuai, Beijing 100028 (CN)
(74) Representative: Dentons UK and Middle East LLP
(86) International application number: PCT/CN2023/111773
(87) International publication number: WO 2024/041376

(57) **Abstract**

The present disclosure provides a distributed graph data processing system, method, apparatus and device, and a storage medium. The system comprises: computing nodes using a distributed architecture, each computing node comprising a computing unit and a persistent storage unit which have the correspondence, and a storage manager being deployed in each computing unit. The storage manager divides a graph data adjacency table into graph data blocks, determines a key value corresponding to each graph data block, and then records and stores the correspondence between the key value and storage position information of the graph data block. After the persistent storage unit persistently stores the graph data block on the basis of the storage position information, the computing unit can read, on the basis of the correspondence between the key value and the storage position information of the graph data block stored in the storage manager, the graph data block from the persistent storage unit to execute a graph data processing task.

## Description

### CROSS-REFERENCE TO RELATED APPLICATIONS

The present disclosure is based on and claims priority to Chinese Application No. 202211010841.1, filed on August 23, 2022, which is incorporated herein by reference in its entirety.

### TECHNICAL FIELD

The present disclosure relates to the field of data processing, and in particular, to a distributed graph data processing system and method, an apparatus, a device, and a storage medium.

### BACKGROUND

In the era of big data, applications such as social networks, Internet of Things, and e-commerce generate a large amount of data, and the data is organized into a graph format to form graph data. In order to efficiently process graph data of a large scale, a distributed graph data processing system is proposed.

Because the graph data has a large amount of data and high requirements on storage resources, it is necessary to store and manage the graph data during a process of performing graph processing tasks such as graph computing and graph mining based on the distributed graph data processing system.

### SUMMARY

In a first aspect, the present disclosure provides a distributed graph data processing system. The method comprises: a computing node in a distributed architecture, wherein the computing node comprises a computing unit and a persistent storage unit that are in a corresponding relationship, and a storage manager is deployed in the computing unit; the computing unit is configured to receive an assigned graph data processing task, and obtain a graph data slice corresponding to the graph data processing task, and store the graph data slice in a corresponding graph data adjacency list; the storage manager is configured to divide the graph data adjacency list corresponding to the graph data processing task into graph data blocks, determine a key value corresponding to each of the graph data blocks, and record and store a corresponding relationship between key values of the graph data blocks and storage location information of the graph data blocks, wherein the graph data blocks comprise node data and edge data in the graph data adjacency list, and the storage location information of the graph data blocks is configured to obtain the graph data blocks; and the persistent storage unit is configured to persistently store the graph data blocks based on the storage location information, to support the computing unit corresponding to the persistent storage unit to perform the graph data processing task.

In a second aspect, the present disclosure provides a distributed graph data processing method. The method comprises: receiving a graph data processing task through a computing node in a distributed architecture, and obtaining a graph data slice corresponding to the graph data processing task, and storing the graph data slice in a corresponding graph data adjacency list; controlling a computing unit in the computing node to call a storage manager to divide the graph data adjacency list corresponding to the graph data processing task into graph data blocks, wherein the graph data blocks comprise node data and edge data in the graph data adjacency list, determining a key value corresponding to each of the graph data blocks, and recording and storing a corresponding relationship between key values of the graph data blocks and storage location information of the graph data blocks, wherein the storage location information of the graph data blocks is configured to obtain the graph data blocks; storing the graph data blocks in a persistent storage unit based on the storage location information; and controlling the computing unit in the computing node to read, from the persistent storage unit based on the corresponding relationship between the key values of the graph data blocks and the storage location information of the graph data blocks, graph data blocks corresponding to the graph data processing task for graph data processing.

In a third aspect, the present disclosure provides a distributed graph data processing apparatus. The apparatus comprises: a first obtaining module, configured to receive a graph data processing task through a computing node in a distributed architecture, and obtain a graph data slice corresponding to the graph data processing task, and store the graph data slice in a corresponding graph data adjacency list; a first storage module, configured to control a computing unit in the computing node to call a storage manager to divide the graph data adjacency list corresponding to the graph data processing task into graph data blocks, wherein the graph data blocks comprise node data and edge data in the graph data adjacency list, determining a key value corresponding to each of the graph data blocks, and recording and storing a corresponding relationship between key values of the graph data blocks and storage location information of the graph data blocks, wherein the storage location information of the graph data blocks is configured to obtain the graph data blocks; a second storage module, configured to store the graph data blocks in a persistent storage unit based on the storage location information; and a graph data processing module, configured to control the computing unit in the computing node to read, from the persistent storage unit based on the corresponding relationship between key values of the graph data blocks and the storage location information of the graph data blocks, graph data blocks corresponding to the graph data processing task for graph data processing.

In a fourth aspect, the present disclosure provides a computer-readable storage medium storing instructions, wherein when the instructions are run on a terminal device, the terminal device is enabled to implement the above method.

In a fifth aspect, the present disclosure provides a data processing device, comprising: a memory, a processor, and a computer program stored on the memory and executable on the processor, wherein when the processor executes the computer program, the above method is implemented.

In a sixth aspect, the present disclosure provides a computer program product, wherein the computer program product comprises a computer program/instruction, and when the computer program/instruction is executed by a processor, the above method is implemented.

### BRIEF DESCRIPTION OF THE DRAWINGS

The accompanying drawings herein are incorporated into and form a part of this specification, illustrate embodiments consistent with the present disclosure, and are used in conjunction with the description to explain the principles of the present disclosure.

In order to more clearly illustrate the technical solutions in the embodiments of the present disclosure or in the related art, the drawings used in the description of the embodiments or the related art will be briefly described below. It is clear that the drawings in the following description show merely some embodiments of the present disclosure, and a person of ordinary skill in the art may still derive other drawings from these drawings without creative efforts.
FIG. 1 is a schematic diagram of a structure of a distributed graph data processing system according to some embodiments of the present disclosure.
FIG. 2 is a schematic diagram of a node adjacency list and an edge adjacency list according to some embodiments of the present disclosure.
FIG. 3 is a schematic diagram of a search tree for mining triangles based on graph data according to some embodiments of the present disclosure.
FIG. 4 is a schematic diagram of a local architecture of a distributed graph data processing system according to some embodiments of the present disclosure.
FIG. 5 is a flowchart of a distributed graph data processing method according to some embodiments of the present disclosure.
FIG. 6 is a schematic diagram of a structure of a distributed graph data processing apparatus according to some embodiments of the present disclosure.
FIG. 7 is a schematic diagram of a structure of a distributed graph data processing device according to some embodiments of the present disclosure.

### DETAILED DESCRIPTION

In order that the above objectives, features, and advantages of the present disclosure can be more clearly understood, the following further describes the solutions of the present disclosure. It should be noted that, when there is no conflict, embodiments of the present disclosure and features in the embodiments may be combined with each other.

A lot of specific details are set forth in the following description to fully understand the present disclosure, but the present disclosure may also be implemented in other manners different from those described herein. Apparently, the embodiments described in the specification are merely some rather than all of the embodiments of the present disclosure.

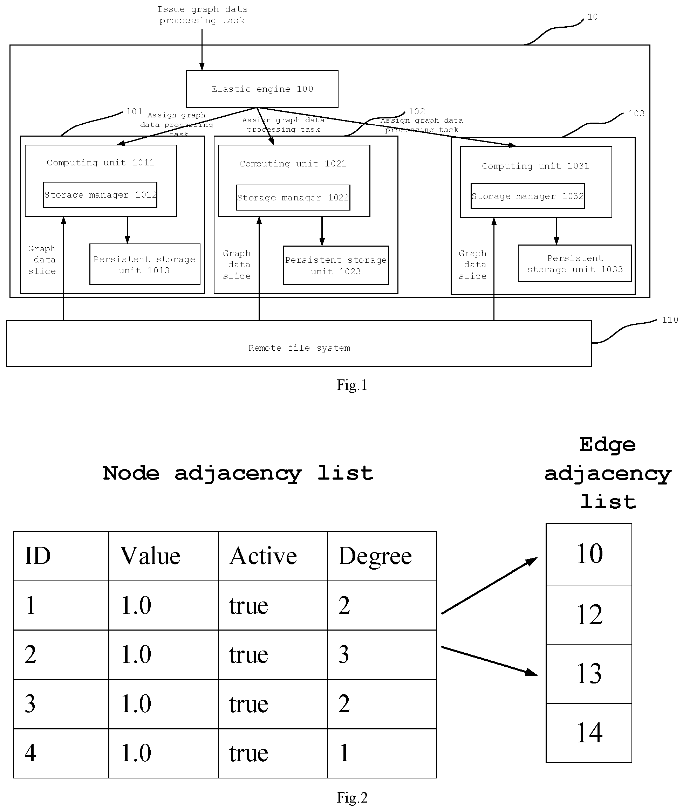

Some embodiments of the present disclosure provide a distributed graph data processing system. FIG. 1 is a schematic diagram of a structure of a distributed graph data processing system according to some embodiments of the present disclosure. The distributed graph data processing system 10 comprises computing nodes in a distributed architecture. As shown in FIG. 1, the computing nodes comprise a computing node 101, a computing node 102, and a computing node 103, which respectively belong to computing nodes in a distributed architecture. Each computing node comprises a computing unit and a persistent storage unit in a corresponding relationship, and a storage manager is deployed in each computing unit. As shown in FIG. 1, the computing node 101 comprises a computing unit 1011 and a persistent storage unit 1012, and a storage manager 1013 is deployed in the computing unit 1011.

The computing unit is configured to receive an assigned graph data processing task, and obtain a graph data slice corresponding to the graph data processing task, and store the graph data slice in a corresponding graph data adjacency list.

As shown in FIG. 1, an elastic engine 100 is deployed in the distributed graph data processing system 10, and is configured to receive a graph data processing task issued by a user, and allocate computing resources, storage resources, and the like based on a load of the graph data processing task. After a computing node comprising a computing unit and a persistent storage unit is allocated to the graph data processing task, the graph data processing task is performed based on the allocated computing node.

For the computing unit in each computing node, after receiving the assigned graph data processing task, the computing unit first obtains, from a remote file system, a graph data slice corresponding to the graph data processing task. The remote file system 110 shown in FIG. 1 is configured to store original graph data corresponding to the graph data processing task in a file format.

In some embodiments of the present disclosure, after obtaining the graph data slice corresponding to the graph data processing task from the remote file system, the computing unit stores the graph data slice in the corresponding graph data adjacency list.

The graph data processing task in some embodiments of the present disclosure may be a graph computing task, a graph mining task, or the like.

The graph computing task may comprise an iterative graph computing task based on a Think Like A Vertex (TLAV) programming paradigm, for example, related graph computing tasks such as a PageRank algorithm and a community detection algorithm.

The graph mining task refers to a process of discovering information that a user is interested in from graph data such as a social network and a deep web. A graph mining result (such as a triangle, a frequent subgraph, and a graph pattern) may be directly used for graph data analysis, or may be indirectly used for another task related to graph data. Therefore, graph mining is widely and practically applied to scenarios in science and business.

Both the graph computing task and the graph mining task are performed based on graph data stored in a graph data adjacency list. The graph data in the graph data adjacency list comprises node data and edge data. The graph data adjacency list comprises a node adjacency list "Vertex table" and an edge adjacency list "Edge table". The node data is stored based on the node adjacency list "Vertex table", and the edge data is stored by using the edge adjacency list "Edge table" to store edges of each node in a consecutive manner and to retain an order of nodes in the node adjacency list. In some embodiments of the present disclosure, a simple shared-nothing design is used. In a distributed environment, a node adjacency list is partitioned in a distributed cluster, and each partition is associated with a corresponding edge. To achieve maximum concurrency of load balancing, in some embodiments of the present disclosure, a system user is allowed to rewrite a graph partitioner, and partition graph data based on a node or an edge of the graph data, to implement division of graph data blocks. FIG. 2 is a schematic diagram of a node adjacency list and an edge adjacency list.

The storage manager is configured to divide the graph data adjacency list corresponding to the graph data processing task into graph data blocks, determine a key value corresponding to each of the graph data blocks, and record and store a corresponding relationship between key values of the graph data blocks and storage location information of the graph data blocks, wherein the graph data blocks comprise node data and edge data in the graph data adjacency list, and the storage location information of the graph data blocks is configured to obtain the graph data blocks.

The storage manager calculates, based on a preset rule, a key value "key" corresponding to each of the graph data blocks, and the computing unit stores each of the graph data blocks in the persistent storage unit, to implement graph data storage based on the "key". The preset rule may be a key value generation rule based on a hash function or the like.

After calculating the corresponding key for each of the graph data blocks, the storage manager records and stores the corresponding relationship between the keys of the graph data blocks and the storage location information of the graph data blocks, so that the graph data blocks can be subsequently read from the persistent storage unit based on the key.

In addition, the persistent storage unit is configured to persistently store the graph data blocks based on the storage location information, to support the computing unit corresponding to the persistent storage unit to perform the graph data processing task.

The persistent storage unit may be implemented by using a hierarchical structure of a memory and a persistent storage medium (such as an Optane persistent memory (PMEM)), or may be implemented by using a hierarchical structure of a memory, a persistent storage medium, and a hard disk. Correspondingly, the persistent storage unit is specifically configured to store the graph data blocks in a corresponding storage layer based on a descending order of priorities of three storage layers: the memory, the persistent storage medium, and the hard disk. The hard disk may be a solid state drive (SSD) or the like.

In some embodiments of the present disclosure, for graph data of different orders of magnitude, different storage media may be used for storage. Specifically, when the order of magnitude of the graph data is relatively small, the graph data may be preferentially stored in a memory, to achieve better efficiency of data reading; for medium-sized graph data, most data may be stored in a persistent memory PMEM, and the PMEM has an advantage of a large capacity and performance close to that of the memory, so that a storage requirement of a slightly larger order of graph data can be ensured; and for relatively large-sized graph data, a hard disk (such as an SSD) with a large capacity may be used for storage, and the relatively large-sized graph data is stored in the hard disk through continuous but not too frequent data overflow.

In some embodiments, the persistent storage unit may be designed based on mixed storage of a memory (which may also be referred to as a main memory, for example, a DRAM), a persistent storage medium (for example, a PMEM), and a hard disk (for example, an SSD). Specifically, because the main memory has an advantage of a fast access speed, the persistent storage unit preferentially provides the main memory. In addition, the access speed of the persistent storage medium PMEM is faster than that of the hard disk. Therefore, when the main memory is occupied, the persistent storage unit preferentially provides the persistent storage medium such as the PMEM, and when the PMEM is occupied, the persistent storage unit provides the hard disk (for example, the SSD), to implement the persistent storage unit of hierarchical storage. In this way, both the access speed of the storage space and a large enough storage space can be ensured. In addition, because some embodiments of the present disclosure use a hierarchical persistent storage design, an amount of data that can be processed by each computing node increases, thereby reducing a number of required computing devices and reducing system costs.

In practical applications, for performance advantages, the DRAM is configured to store metadata, for example, a storage index of a graph data block stored in the PMEM layer and the SSD layer, respectively. If not specified, the graph data blocks may be first written into the DRAM layer, and then asynchronously written into the PMEM layer. If idle resources of the PMEM layer are insufficient, the graph data blocks may be flushed from the PMEM layer to the SSD layer, and stored in the SSD layer.

In some other embodiments, the persistent storage unit 102 may be designed based on mixed storage of a memory and a persistent storage medium. Because the persistent storage medium such as the PMEM can ensure both the access speed and a storage space much larger than that of the memory, the above implementation can also ensure both the access speed of the storage space and a large enough storage space.

In addition, the computing unit is further configured to read, from the persistent storage unit based on the corresponding relationship between key values of the graph data blocks and the storage location information of the graph data blocks that is stored in the storage manager, graph data blocks corresponding to the graph data processing task for graph data processing.

In practical applications, in a process of performing a graph data processing task, the computing unit reads, through the storage manager, required graph data from the persistent storage unit, to perform the graph data processing task. Specifically, the storage manager generates a key based on a graph data reading request of the computing unit, determines storage location information corresponding to the key, and then reads, from the persistent storage unit based on the computing unit, a corresponding graph data block, to obtain the required graph data.

The computing unit may comprise a first computing unit and/or a second computing unit. The first computing unit is configured to perform a graph computing task, and the second computing unit is configured to perform a graph mining task.

The distributed graph data processing system provided in some embodiments of the present disclosure unifies two programming paradigms, graph computing and graph mining, into the same graph data processing system, that is, the distributed graph data processing system 10 can process both the graph computing task and the graph mining task. Although graph computing and graph mining engines are different in an underlying computing mode, the distributed graph data processing system in some embodiments of the present disclosure provides a unified interface, so that they are consistent externally, for example, consistent with a high-level SDK and a low-level component (such as hierarchical storage and a graph data index) for developers.

The distributed graph data processing system provided in some embodiments of the present disclosure comprises computing nodes in a distributed architecture. Each computing node comprises a computing unit and a persistent storage unit in a corresponding relationship, and a storage manager is deployed in each computing unit. When the computing unit receives a graph data processing task and obtains a graph data slice corresponding to the graph data processing task, the computing unit stores the graph data slice in a corresponding graph data adjacency list. The storage manager deployed in the computing unit divides the graph data adjacency list into graph data blocks, and determines a key value corresponding to each of the graph data blocks, and records and stores a corresponding relationship between the key values and storage location information of the graph data blocks. After the persistent storage unit corresponding to the computing unit persistently stores the graph data blocks based on the storage location information, the computing unit may read the graph data blocks from the persistent storage unit based on the corresponding relationship between key values of the graph data blocks and the storage location information of the graph data blocks, to perform the graph data processing task.

It can be learned that in the distributed graph data processing system provided in some embodiments of the present disclosure, the graph data is stored in the persistent storage unit by using the storage manager. Because the persistent storage unit is used as an external storage device and can meet a storage requirement of a large amount of graph data, and has a small impact on efficiency of graph data processing, the distributed graph data processing system provided in some embodiments of the present disclosure can meet a storage requirement of graph data processing on storage resources.

Based on the foregoing embodiments, the computing unit generates intermediate state data in a process of performing the graph data processing task. To support a fault tolerance function of the distributed graph data processing system, the intermediate state data corresponding to the graph data processing task may also be persistently stored.

In some embodiments, the storage manager is further configured to receive intermediate state data generated in an execution process of the graph data processing task, divide the intermediate state data into intermediate state data blocks, determine a key value corresponding to each intermediate state data block, and store a corresponding relationship between the key values and storage location information of the intermediate state data blocks, wherein the storage location information of the intermediate state data blocks is configured to obtain the intermediate state data blocks.

The persistent storage unit is further configured to store the intermediate state data blocks based on the storage location information, to support the fault tolerance function of the distributed graph data processing system.

In some embodiments of the present disclosure, the intermediate state data generated in the execution process of the graph data processing task may be stored in the persistent storage unit based on a hierarchical storage manner. Reference may be made to the foregoing embodiments for details.

It is assumed that the graph data processing task is a graph computing task, and the intermediate state data corresponding to the graph data processing task comprises message data and intermediate state snapshot data. The intermediate state snapshot data comprises node snapshot data and message snapshot data.

In practical applications, because the graph computing task is usually an iterative graph computing task and to support a fault tolerance function, in some embodiments of the present disclosure, the intermediate state data corresponding to the graph data processing task may be obtained and stored at a preset frequency. For example, the intermediate state data is obtained once every 100 rounds of graph computing tasks are performed. Subsequently, when it is detected that an exception occurs in the distributed graph data processing system, rollback stop loss of the graph data processing task may be implemented based on the latest round of intermediate state data. In some embodiments, some embodiments of the present disclosure are not limited to an implementation of fault tolerance based on the intermediate state data.

It is assumed that the graph data processing task is a graph mining task, and the intermediate state data corresponding to the graph data processing task comprises a currently grown hierarchy in a search tree corresponding to the graph data processing task and a current growth position in the currently grown hierarchy.

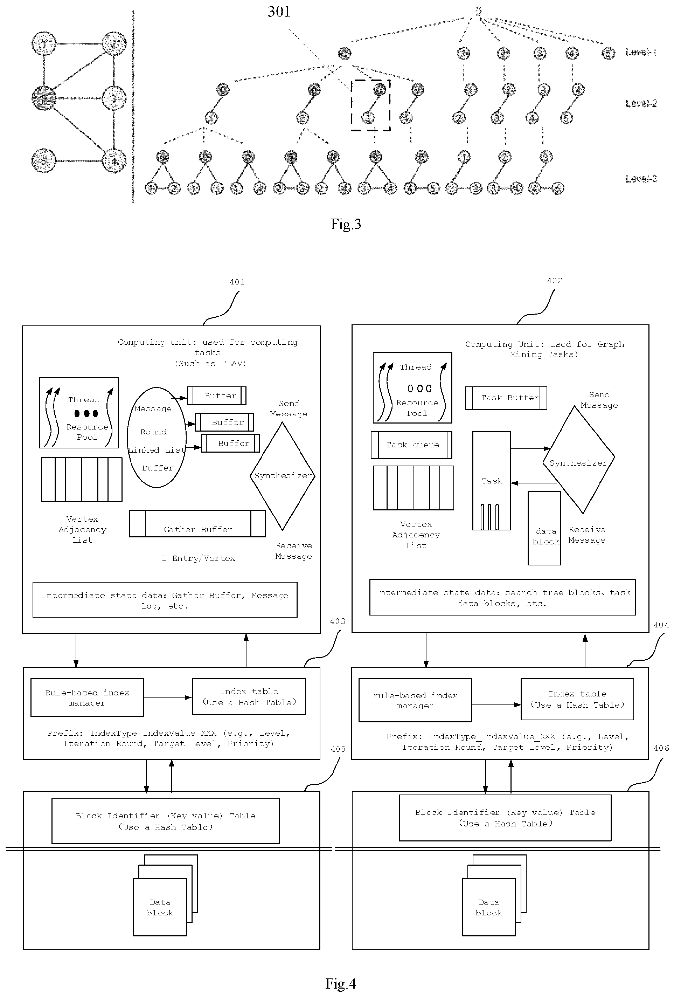

In practical applications, the graph mining task is usually a process of search tree growth. FIG. 3 is a schematic diagram of a search tree for mining triangles based on graph data according to some embodiments of the present disclosure. In a process of mining triangles based on graph data, a node at a first hierarchy is first determined, for example, a node corresponding to Level-1 shown in FIG. 3. Then, node growth is performed based on the node at the first hierarchy, to obtain a node at a second hierarchy, for example, a node corresponding to Level-2 shown in FIG. 3. Further, node growth is performed based on the node at the second hierarchy, to obtain a node at a third hierarchy, for example, a node corresponding to Level-3 shown in FIG. 3. Whether the node at the third hierarchy meets a triangle condition is determined, to determine a result of the graph mining task.

In the foregoing execution process of the graph mining task, the intermediate state data comprises the currently grown hierarchy in the search tree corresponding to the graph data processing task and the current growth position in the currently grown hierarchy. It is assumed that the intermediate state data is recorded when the search tree grows to a growth position 301 at the second hierarchy. In this case, the currently grown hierarchy in the search tree comprised in the intermediate state data refers to the second hierarchy, and the current growth position in the currently grown hierarchy refers to the growth position 301. Because the growth position 301 is at the third growth position at the second hierarchy, the intermediate state data may be recorded as (Level-2; 3).

The distributed graph data processing system provided in some embodiments of the present disclosure can not only store graph data in the persistent storage unit by using the storage manager, to ensure storage resources required for graph data processing from two dimensions, namely storage space and processing efficiency, but also can perform persistent storage on the intermediate state data generated in the execution process of the graph data processing task by using the storage manager, to support the fault tolerance function of the distributed graph data processing system. Therefore, the distributed graph data processing system provided in some embodiments of the present disclosure can meet a storage requirement of graph data processing on storage resources, and support rollback stop loss of the graph data processing task.

To facilitate further understanding of the computing unit, the persistent storage unit, and the storage manager in the distributed graph data processing system provided in some embodiments of the present disclosure, FIG. 4 is a schematic diagram of a local architecture of a distributed graph data processing system according to some embodiments of the present disclosure.

The distributed graph data processing system may comprise both a computing unit 401 configured to perform a graph computing task and a computing unit 402 configured to perform a graph mining task. In some embodiments of the present disclosure, a storage manager is separately set for each computing unit in the distributed graph data processing system, to implement decoupling between the computing unit and the persistent storage unit, so that an available storage medium between an application layer (that is, the computing unit) and a storage layer (that is, the persistent storage unit) can be flexibly expanded. As shown in FIG. 4, the computing unit 401 is deployed with a storage manager 403, and the computing unit 402 is deployed with a storage manager 404.

The storage manager comprises two important parts: a rule-based index manager and an index table. The rule-based index manager is configured to define an index type, and then combine the index type as a prefix with an index value to obtain an entire key value, to uniquely identify a graph data block or an intermediate state data block. The index table may be implemented by using a concurrent hash table, and is configured to store a corresponding relationship between the key values and a storage address of the graph data blocks/intermediate state data blocks.

Based on the index manager and the index table, the graph data blocks and the intermediate state data blocks may be stored in the persistent storage unit. As shown in FIG. 4, the computing unit 401 may store the graph data blocks and the intermediate state data blocks in a persistent storage unit 405, and the computing unit 402 may store the graph data blocks and the intermediate state data blocks in a persistent storage unit 406. Each persistent storage unit may store the graph data blocks and the intermediate state data blocks based on a hierarchical structure. In some embodiments, the persistent storage unit with the hierarchical structure may be understood with reference to the foregoing embodiments, and details are not described herein again.

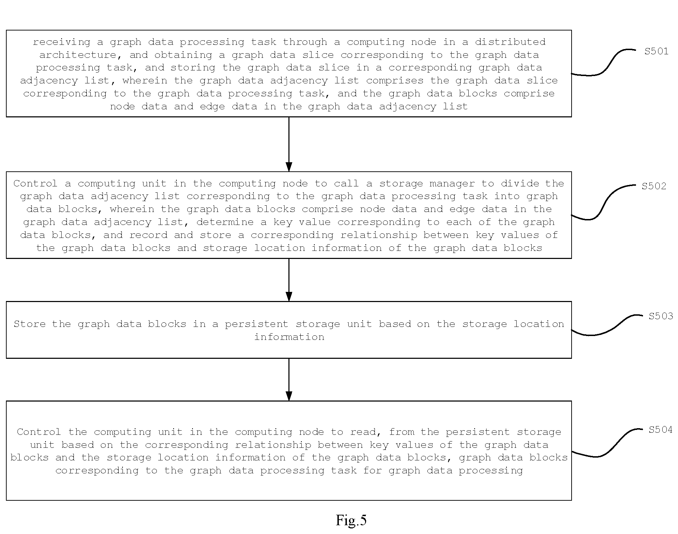

Based on the foregoing understanding of the distributed graph data processing system, some embodiments of the present disclosure further provide a distributed graph data processing method. FIG. 5 is a flowchart of a distributed graph data processing method according to some embodiments of the present disclosure.

In some embodiments, the distributed graph data processing method provided in some embodiments of the present disclosure may be applied to a computing unit in a distributed graph data processing system. The computing unit is connected to a persistent storage unit. The method comprises: S501: receiving a graph data processing task through a computing node in a distributed architecture, and obtaining a graph data slice corresponding to the graph data processing task, and storing the graph data slice in a corresponding graph data adjacency list.

The graph data adjacency list comprises the graph data slice corresponding to the graph data processing task, and the graph data blocks comprise node data and edge data in the graph data adjacency list.

In some embodiments of the present disclosure, after receiving the assigned graph data processing task, the computing unit obtains, from a remote file system, a graph data slice corresponding to the graph data processing task, and then stores the graph data slice by using a graph data adjacency list, and divides the graph data adjacency list storing the graph data slice into graph data blocks. A specific division manner is not limited in some embodiments of the present disclosure.

The computing unit in some embodiments of the present disclosure is deployed with the storage manager, and the storage manager divides the graph data adjacency list corresponding to the graph data processing task to obtain the graph data blocks.

S502: Control a computing unit in the computing node to call a storage manager to divide the graph data adjacency list corresponding to the graph data processing task into graph data blocks, wherein the graph data blocks comprise node data and edge data in the graph data adjacency list, determine a key value corresponding to each of the graph data blocks, and record and store a corresponding relationship between key values of the graph data blocks and storage location information of the graph data blocks.

The storage location information of the graph data blocks is configured to obtain the graph data blocks.

In some embodiments of the present disclosure, after the graph data blocks are obtained through division, a key value key corresponding to each of the graph data blocks is determined. The key corresponding to each of the graph data blocks is a combination of a prefix and a graph data block ID. The prefix may be an index type, and the index type may be determined based on a data type stored in the graph data blocks. For example, an index type corresponding to node data is kVertex, and an index type corresponding to edge data may be kEdge. The graph data blocks ID is added after the prefix, to determine different graph data blocks of a same index type. In addition, based on the prefix of the index type, operations such as reading of the graph data blocks of the same index type may be performed, which improves efficiency of graph data reading.

In addition, to facilitate subsequent reading of the graph data blocks, the corresponding relationship between key values of the graph data blocks and the storage location information of the graph data blocks may be persistently stored. Based on the corresponding relationship, the storage location information corresponding to the graph data blocks may be determined through key values of the graph data blocks, and then graph data in the graph data blocks is read based on the storage location information.

In some embodiments, a key value may be generated for each of the graph data blocks based on a hash function, to be used as a storage index of the graph data blocks. In addition, some embodiments of the present disclosure are not limited to other manners of generating the key value.

S503: Store the graph data blocks in a persistent storage unit based on the storage location information.

S504: Control the computing unit in the computing node to read, from the persistent storage unit based on the corresponding relationship between key values of the graph data blocks and the storage location information of the graph data blocks, graph data blocks corresponding to the graph data processing task for graph data processing.

The storage unit for persistently storing the graph data blocks may be implemented based on a hierarchical structure. For example, the hierarchical structure may use a memory, a persistent storage medium such as a PMEM, and a hard disk, or may use a memory and a persistent storage medium such as a PMEM, wherein a storage priority of the memory is higher than that of the persistent storage medium, and a storage priority of the persistent storage medium is higher than that of the hard disk.

In some embodiments, for a case that the hierarchical structure is implemented by using the memory and the persistent storage medium PMEM, after receiving the graph data blocks, some embodiments of the present disclosure preferentially use the memory to store the graph data blocks based on the storage location information. In response to that idle resources in the memory are insufficient, the graph data blocks are stored by using the persistent storage medium.

In addition, for a case that the hierarchical structure is implemented by using the memory, the persistent storage medium such as the PMEM, and the hard disk, after receiving the graph data blocks, some embodiments of the present disclosure preferentially use the memory to store the graph data blocks based on the storage location information. In response to that idle resources in the memory are insufficient, the graph data blocks are stored by using the persistent storage medium. In response to that idle resources in the persistent storage medium are insufficient, the graph data blocks are stored by using the hard disk.

The distributed graph data processing method provided in some embodiments of the present disclosure stores graph data in a persistent storage unit that can meet a storage requirement of a large amount of graph data, and has a small impact on efficiency of graph data processing. Therefore, the distributed graph data processing system provided in some embodiments of the present disclosure can meet a storage requirement of graph data processing on storage resources.

Based on the foregoing embodiments, to support a fault tolerance function of the distributed graph data processing method, some embodiments of the present disclosure may further perform persistent storage on intermediate state data generated in an execution process of the graph data processing task, so that the intermediate state data can be subsequently used for fault tolerance processing of the distributed graph data processing method.

In practical applications, the computing unit in the computing node is controlled to call the storage manager to divide the intermediate state data generated in the execution process of the graph data processing task into intermediate state data blocks. Then, a key value corresponding to each of the intermediate state data blocks is determined, and a corresponding relationship between the key values and storage location information of the intermediate state data blocks is stored, wherein the storage location information of the intermediate state data blocks is configured to obtain the intermediate state data blocks. Further, the intermediate state data blocks are persistently stored based on the storage location information. For example, the intermediate state data block may be stored in a persistent memory PMEM in a form of a key value.

In addition, some embodiments of the present disclosure may perform fault tolerance processing on the distributed graph data processing system based on the intermediate state data blocks in the persistent storage unit.

In some embodiments, the persistent storage unit may be implemented by using a hierarchical structure. The hierarchical structure may comprise a memory, a persistent storage medium such as a PMEM, and a hard disk, or may comprise a memory and a persistent storage medium such as a PMEM, and a storage priority is that the memory is the highest and the hard disk is the lowest.

In some embodiments, because an access speed of the PMEM is faster than that of the hard disk, when there are idle storage resources in the PMEM, the intermediate state data blocks are preferentially stored in the PMEM. When there is no idle storage resource in the PMEM, the intermediate state data blocks are stored in the hard disk (such as an SSD), to implement hierarchical storage.

In some embodiments, the graph data processing task may be a graph computing task or a graph mining task.

It is assumed that the graph data processing task is a graph computing task, and the intermediate state data corresponding to the graph data processing task comprises message data and intermediate state snapshot data. The intermediate state snapshot data comprises node snapshot data and message snapshot data. The message data refers to a message transmitted between a current computing node and another computing node in an execution process of the graph computing task, and is used for execution of the graph computing task of the current computing node. The intermediate state snapshot data refers to snapshot data obtained for node data and message data of a current round when every N rounds of graph computing tasks are performed, and is used for rollback stop loss of a fault tolerance function. N may be set based on requirements.

It is assumed that the graph data processing task is a graph mining task, and the intermediate state data corresponding to the graph data processing task comprises a currently grown hierarchy in a search tree and a current growth position in the currently grown hierarchy. Execution of the graph mining task is a process of search tree growth. To perform fault tolerance in an execution process of the graph mining task, in a process of executing the graph mining task, the computing unit obtains the currently grown hierarchy in the search tree and the current growth position in the currently grown hierarchy at a preset frequency, to implement rollback stop loss of the fault tolerance function.

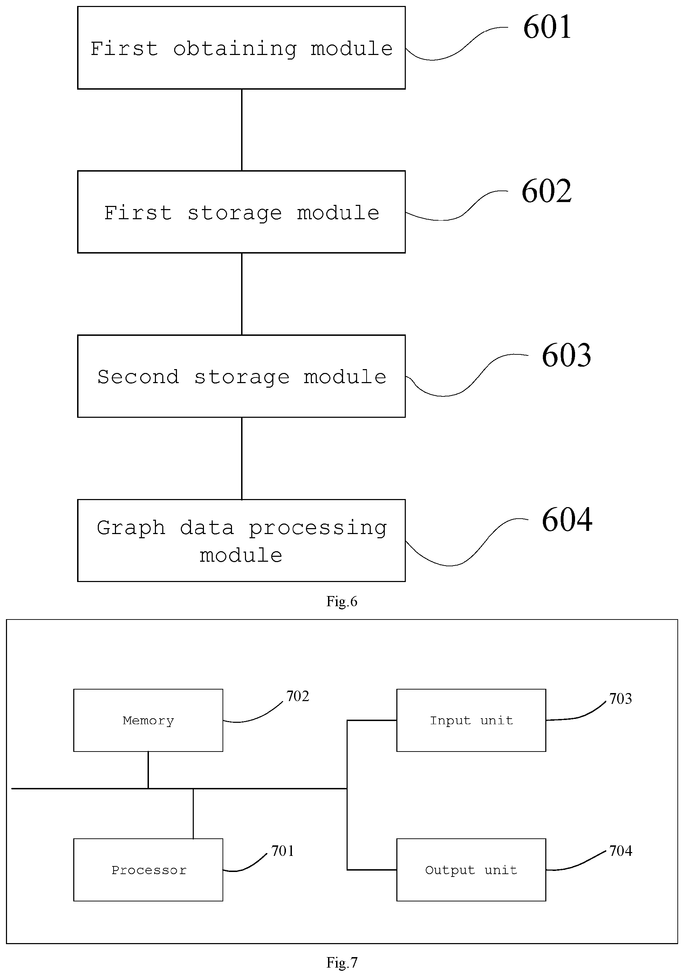

Based on the foregoing system and method embodiments, the present disclosure further provides a distributed graph data processing apparatus. FIG. 6 is a schematic diagram of a structure of a distributed graph data processing apparatus according to some embodiments of the present disclosure. The apparatus comprises: a first obtaining module 601, configured to receive a graph data processing task through a computing node in a distributed architecture, and obtain a graph data slice corresponding to the graph data processing task, and store the graph data slice in a corresponding graph data adjacency list; a first storage module 602, configured to control a computing unit in the computing node to call a storage manager to divide the graph data adjacency list corresponding to the graph data processing task into graph data blocks, wherein the graph data blocks comprise node data and edge data in the graph data adjacency list, determining a key value corresponding to each of the graph data blocks, and recording and storing a corresponding relationship between key values of the graph data blocks and storage location information of the graph data blocks, wherein the storage location information of the graph data blocks is configured to obtain the graph data blocks; a second storage module 603, configured to store the graph data blocks in a persistent storage unit based on the storage location information; and a graph data processing module 604, configured to control the computing unit in the computing node to read, from the persistent storage unit based on the corresponding relationship between key values of the graph data blocks and the storage location information of the graph data blocks, graph data blocks corresponding to the graph data processing task for graph data processing.

In some embodiments, the apparatus further comprises: a dividing module, configured to control the computing unit in the computing node to call the storage manager to divide intermediate state data generated in an execution process of the graph data processing task into intermediate state data blocks; a third storage module, configured to determine a key value corresponding to each intermediate state data block, and record and store a corresponding relationship between the key values and storage location information of the intermediate state data blocks, wherein the storage location information of the intermediate state data blocks is configured to obtain the intermediate state data blocks; and a fourth storage module, configured to store the intermediate state data blocks in the persistent storage unit based on the storage location information.

In some embodiments, the graph data processing task is a graph computing task, the intermediate state data corresponding to the graph data processing task comprises message data and intermediate state snapshot data, the intermediate state snapshot data comprises node snapshot data and message snapshot data, the message data is calculation result data transmitted between computing nodes in the execution process of the graph data processing task, and the intermediate state snapshot data is configured to restore and execute the graph data processing task.

In some embodiments, the graph data processing task is a graph mining task, and the intermediate state data corresponding to the graph data processing task comprises a currently grown hierarchy in a search tree corresponding to the graph data processing task and a current growth position in the currently grown hierarchy.

In some embodiments, the second storage module comprises: a first storage submodule, configured to preferentially use a memory to store the graph data blocks based on the storage location information after receiving the graph data blocks; a second storage submodule, configured to use a persistent storage medium to store the graph data blocks in response to that idle resources in the memory are insufficient; and a third storage submodule, configured to use a hard disk to store the graph data blocks in response to that idle resources in the persistent storage medium are insufficient.

In some embodiments, the second storage module comprises: a fourth storage submodule, configured to preferentially use a memory to store the graph data blocks based on the storage location information after receiving the graph data blocks; and a fifth storage submodule, configured to use a persistent storage medium to store the graph data blocks in response to that idle resources in the memory are insufficient.

In some embodiments, the persistent storage medium comprises a persistent memory.

The distributed graph data processing apparatus provided in some embodiments of the present disclosure can not only store graph data in the persistent storage unit by using the storage manager, to ensure storage resources required for graph data processing from two dimensions, namely storage space and processing efficiency, but also can perform persistent storage on the intermediate state data generated in the execution process of the graph data processing task by using the storage manager, to support the fault tolerance function of the distributed graph data processing system. Therefore, the distributed graph data processing apparatus provided in some embodiments of the present disclosure can meet a storage requirement of graph data processing on storage resources, and support rollback stop loss of the graph data processing task.

In addition to the foregoing method and apparatus, some embodiments of the present disclosure further provide a computer-readable storage medium. Instructions are stored in the computer-readable storage medium. When the instructions are run on a terminal device, the terminal device is enabled to implement the distributed graph data processing method described in some embodiments of the present disclosure.

Some embodiments of the present disclosure further provide a computer program product. The computer program product comprises a computer program/instruction, and when the computer program/instruction is executed by a processor, the distributed graph data processing method described in some embodiments of the present disclosure is implemented.

In addition, some embodiments of the present disclosure further provide a distributed graph data processing device. As shown in FIG. 7, the device may comprise a processor 701, a memory 702, an input unit 703, and an output unit 704. A quantity of processors 701 in the distributed graph data processing device may be one or more, and FIG. 7 uses one processor as an example. In some embodiments of the present disclosure, the processor 701, the memory 702, the input unit 703, and the output unit 704 may be connected through a bus or in another manner, and FIG. 7 uses connection through a bus as an example.

The memory 702 may be configured to store a software program and a module. The processor 701 runs the software program and the module stored in the memory 702, to perform various functional applications and data processing of the distributed graph data processing device. The memory 702 may mainly comprise a program storage area and a data storage area. The program storage area may store an operating system, an application program required for at least one function, and the like. In addition, the memory 702 may comprise a high-speed random access memory, and may further comprise a non-volatile memory, for example, at least one magnetic disk storage device, a flash memory device, or another volatile solid-state storage device. The input unit 703 may be configured to receive inputted numeric or character information, and generate a signal input related to user setting and function control of the distributed graph data processing device.

Specifically, in this embodiment, the processor 701 loads an executable file corresponding to a process of one or more application programs into the memory 702 based on the following instructions, and runs the application program stored in the memory 702 by using the processor 701, to implement various functions of the foregoing distributed graph data processing device.

It should be noted that, in this specification, relationship terms such as "first" and "second" are merely used to distinguish one entity or operation from another entity or operation, but do not necessarily require or imply that there is any such actual relationship or sequence between these entities or operations. Moreover, the term "include", "comprise" or any other variant thereof is intended to cover a non-exclusive inclusion, so that a process, method, article, or device that comprises a list of elements comprises not only those elements, but also other elements not explicitly listed, or further comprises elements inherent to such a process, method, article, or device. Without more restrictions, an element defined by a statement "comprise a/an..." does not exclude the existence of another same element in a process, method, article, or device that comprises the element.

The foregoing descriptions are merely specific embodiments of the present disclosure, so that those skilled in the art can understand or implement the present disclosure. Various modifications to these embodiments are obvious to those skilled in the art, and the general principles defined herein may be implemented in other embodiments without departing from the spirit or scope of the present disclosure. Therefore, the present disclosure is not limited to the embodiments described herein, but should comply with the widest scope consistent with the principles and novel features disclosed herein.

## Claims

1. A distributed graph data processing system, comprising:
a computing node in a distributed architecture, wherein the computing node comprises a computing unit and a persistent storage unit that are in a corresponding relationship, and a storage manager is deployed in the computing unit;
the computing unit is configured to receive an assigned graph data processing task, and obtain a graph data slice corresponding to the graph data processing task, and store the graph data slice in a corresponding graph data adjacency list;
the storage manager is configured to divide the graph data adjacency list corresponding to the graph data processing task into graph data blocks, determine a key value corresponding to each of the graph data blocks, and record and store a corresponding relationship between key values of the graph data blocks and storage location information of the graph data blocks, wherein the graph data blocks comprise node data and edge data in the graph data adjacency list, and the storage location information of the graph data blocks is configured to obtain the graph data blocks; and
the persistent storage unit is configured to persistently store the graph data blocks based on the storage location information, to support the computing unit corresponding to the persistent storage unit to perform the graph data processing task.

2. The distributed graph data processing system according to claim 1, wherein:
the storage manager is further configured to receive intermediate state data generated in an execution process of the graph data processing task, divide the intermediate state data into intermediate state data blocks, determine a key value corresponding to each of the intermediate state data blocks, and store a corresponding relationship between the key values and storage location information of the intermediate state data blocks, wherein the storage location information of the intermediate state data blocks is configured to obtain the intermediate state data blocks; and
the persistent storage unit is further configured to store the intermediate state data blocks based on the storage location information.

3. The distributed graph data processing system according to claim 2, wherein the graph data processing task is a graph computing task, the intermediate state data corresponding to the graph data processing task comprises message data and intermediate state snapshot data, the intermediate state snapshot data comprises node snapshot data and message snapshot data, the message data is calculation result data transmitted between computing nodes in the execution process of the graph data processing task, and the intermediate state snapshot data is configured to restore and execute the graph data processing task.

4. The distributed graph data processing system according to claim 2 or 3, wherein the graph data processing task is a graph mining task, and the intermediate state data corresponding to the graph data processing task comprises a currently grown hierarchy in a search tree corresponding to the graph data processing task and a current growth position in the currently grown hierarchy.

5. The distributed graph data processing system according to any one of claims 1 to 4, wherein the persistent storage unit uses a hierarchical structure of a memory, a persistent storage medium, and a hard disk; and
the persistent storage unit is configured to store the graph data blocks in a corresponding storage layer based on a descending order of priorities of three storage layers: the memory, the persistent storage medium, and the hard disk.

6. The distributed graph data processing system according to any one of claims 1 to 5, wherein the persistent storage unit uses a hierarchical structure of a memory and a persistent storage medium; and
the persistent storage unit is configured to preferentially use the memory to store the graph data blocks after receiving the graph data blocks, and use the persistent storage medium to store the graph data blocks in response to that idle resources in the memory are insufficient.

7. The distributed graph data processing system according to claim 5 or 6, wherein the persistent storage medium comprises a persistent memory.

8. The distributed graph data processing system according to any one of claims 1 to 7, wherein the computing unit comprises at least one of a first computing unit or a second computing unit, and the graph data processing task comprises at least one of a graph computing task or a graph mining task;
the first computing unit is configured to perform the graph computing task; and
the second computing unit is configured to perform the graph mining task.

9. A distributed graph data processing method, comprising:
receiving a graph data processing task through a computing node in a distributed architecture, and obtaining a graph data slice corresponding to the graph data processing task, and storing the graph data slice in a corresponding graph data adjacency list;
controlling a computing unit in the computing node to call a storage manager to divide the graph data adjacency list corresponding to the graph data processing task into graph data blocks, wherein the graph data blocks comprise node data and edge data in the graph data adjacency list, determining a key value corresponding to each of the graph data blocks, and recording and storing a corresponding relationship between key values of the graph data blocks and storage location information of the graph data blocks, wherein the storage location information of the graph data blocks is configured to obtain the graph data blocks;
storing the graph data blocks in a persistent storage unit based on the storage location information; and
controlling the computing unit in the computing node to read, from the persistent storage unit based on the corresponding relationship between the key values of the graph data blocks and the storage location information of the graph data blocks, the graph data blocks corresponding to the graph data processing task for graph data processing.

10. The distributed graph data processing method according to claim 9, further comprising:
controlling the computing unit in the computing node to call the storage manager to divide intermediate state data generated in an execution process of the graph data processing task into intermediate state data blocks;
determining a key value corresponding to each of the intermediate state data blocks, and recording and storing a corresponding relationship between key values and storage location information of the intermediate state data blocks, wherein the storage location information of the intermediate state data blocks is configured to obtain the intermediate state data blocks; and
storing the intermediate state data blocks in the persistent storage unit based on the storage location information.

11. The distributed graph data processing method according to claim 10, wherein the graph data processing task is a graph computing task, the intermediate state data corresponding to the graph data processing task comprises message data and intermediate state snapshot data, the intermediate state snapshot data comprises node snapshot data and message snapshot data, the message data is calculation result data transmitted between computing nodes in the execution process of the graph data processing task, and the intermediate state snapshot data is configured to restore and execute the graph data processing task.

12. The distributed graph data processing method according to claim 10 or 11, wherein the graph data processing task is a graph mining task, and the intermediate state data corresponding to the graph data processing task comprises a currently grown hierarchy in a search tree corresponding to the graph data processing task and a current growth position in the currently grown hierarchy.

13. The distributed graph data processing method according to any one of claims 9 to 12, wherein the storing the graph data blocks in a persistent storage unit based on the storage location information comprises:
preferentially using a memory to store the graph data blocks based on the storage location information after receiving the graph data blocks;
using a persistent storage medium to store the graph data blocks in response to that idle resources in the memory are insufficient; and
using a hard disk to store the graph data blocks in response to that idle resources in the persistent storage medium are insufficient.

14. The distributed graph data processing method according to any one of claims 9 to 13, wherein the storing the graph data blocks in a persistent storage unit based on the storage location information comprises:
preferentially using a memory to store the graph data blocks based on the storage location information after receiving the graph data blocks; and
using a persistent storage medium to store the graph data blocks in response to that idle resources in the memory are insufficient.

15. The distributed graph data processing method according to claim 13 or 14, wherein the persistent storage medium comprises a persistent memory.

16. A distributed graph data processing apparatus, comprising:
a first obtaining module, configured to receive a graph data processing task through a computing node in a distributed architecture, and obtain a graph data slice corresponding to the graph data processing task, and store the graph data slice in a corresponding graph data adjacency list;
a first storage module, configured to control a computing unit in the computing node to call a storage manager to divide the graph data adjacency list corresponding to the graph data processing task into graph data blocks, wherein the graph data blocks comprise node data and edge data in the graph data adjacency list, determining a key value corresponding to each of the graph data blocks, and recording and storing a corresponding relationship between key values of the graph data blocks and storage location information of the graph data blocks, wherein the storage location information of the graph data blocks is configured to obtain the graph data blocks;
a second storage module, configured to store the graph data blocks in a persistent storage unit based on the storage location information; and
a graph data processing module, configured to control the computing unit in the computing node to read, from the persistent storage unit based on the corresponding relationship between the key values of the graph data blocks and the storage location information of the graph data blocks, the graph data blocks corresponding to the graph data processing task for graph data processing.

17. A computer-readable storage medium, wherein instructions are stored in the computer-readable storage medium, and when the instructions are run on a terminal device, the terminal device is enabled to implement the distributed graph data processing method according to any one of claims 9 to 15.

18. A distributed graph data processing device, comprising:
a memory; and
a processor coupled to the memory, wherein the processor is configured to execute the distributed graph data processing method according to any one of claims 9 to 15 based on instructions stored in the memory.

19. A computer program product, wherein the computer program product comprises a computer program/instruction, and when the computer program/instruction is executed by a processor, the distributed graph data processing method according to any one of claims 9 to 15 is implemented.

20. A computer program, comprising:
instructions that, when executed by a processor, cause the processor to perform the distributed graph data processing method according to any one of claims 9 to 15.
